# EUROPEAN PATENT APPLICATION

(11) **EP 4 600 809 A1**
(43) Date of publication of application: **13.08.2025**
(21) Application number: 23874289.4
(22) Date of filing: 25.09.2023
(51) Int. Cl.: G06F 8/40

(54) **CONVERSION METHOD FOR MULTIMEDIA EDITING FILE, APPARATUS, DEVICE, AND MEDIUM**

(30) Priority: 08.10.2022 CN 202211230505
(71) Applicant: Beijing Zitiao Network Technology Co., Ltd., Beijing 100190 (CN)
(72) Inventor: ZENG, Bin, Beijing 100028 (CN)
(74) Representative: Marks & Clerk LLP
(86) International application number: PCT/CN2023/120913
(87) International publication number: WO 2024/074097

(57) **Abstract**

Provided are a conversion method for a multimedia editing file, an apparatus, a device, and a storage medium. In the method, a multimedia material and an editing operation of a multimedia editing file are indicated by means of different indication information, and the indication information is encapsulated into a data format which can be supported by each application program itself, so that conversion of multimedia materials and editing operations having relatively large data volumes is not needed, thus achieving file format conversion between different application programs by means of converting the indication information. The conversion mode is easy to implement and has high conversion efficiency, and likewise supports conversion of multimedia editing files occupying large memory in different application programs, thereby improving the reliability and universality of multimedia file conversion.

## Description

The present application claims priority of the Chinese Patent Application No. 202211230505.8 filed on October 8, 2022, the entire disclosure of which is incorporated herein by reference as part of the present disclosure.

### TECHNICAL FIELD

Embodiments of the present disclosure relate to a conversion method and apparatus for a multimedia editing file, a device, and a medium.

### BACKGROUND

Currently, there are many types of applications on the electronic device with various functions, and the same file can be processed through different applications. For example, a user edits a video using a video editing application and then publishes the video using a video publishing application. For another example, a user edits an audio using an audio editing application and then uses another video editing application to continue processing and publishing the audio.

However, different applications support different data formats, which may involve the problem of file format conversion between different applications. Therefore, it is necessary to propose a reliable file conversion method to ensure that the problem of conversion error does not occur when file format conversion occurs between different applications.

### SUMMARY

In order to solve the above technical problems or at least partially solve the above technical problems, the present disclosure provides a conversion method and apparatus for a multimedia editing file, a device, and a medium.

In a first aspect, the present disclosure provides a conversion method for a multimedia editing file, and the method comprises:
acquiring the first multimedia editing file, the first multimedia editing file is used to indicate an editing project for performing an editing operation on a multimedia material, a first indication information for indicating the multimedia material and a second indication information for indicating the editing operation are encapsulated in the first multimedia editing file according to a first data format, the first data format is a data format supported by a first application;
parsing the first multimedia editing file to acquire the first indication information and the second indication information;
encapsulating the first indication information and the second indication information into a second multimedia editing file according to a second data format, the second multimedia editing file is used to indicate the editing project, the second data format is a data format supported by a second application.

In a second aspect, the present disclosure provides a conversion apparatus for a multimedia editing file, and the apparatus comprises:
an acquisition module, configured to acquire a first multimedia editing file, the first multimedia editing file is used to indicate an editing project for performing an editing operation on a multimedia material, a first indication information for indicating the multimedia material and a second indication information for indicating the editing operation are encapsulated in the first multimedia editing file according to a first data format, the first data format is a data format supported by a first application;
a parsing module, configured to parse the first multimedia editing file to acquire the first indication information and the second indication information;
an encapsulation module, configured to encapsulate the first indication information and the second indication information into a second multimedia editing file according to a second data format, the second multimedia editing file is used to indicate the editing project, the second data format is a data format supported by a second application.

In a third aspect, the present disclosure provides a computer-readable storage medium, the computer-readable storage medium stores instructions, the instructions upon running on a terminal device, cause the terminal device to implement the above method.

In a fourth aspect, the present disclosure provides a device, including: a memory, a processor, and a computer program stored on the memory and capable of being run on the processor, the processor upon executing the computer program, implements the above method.

In a fifth aspect, the present disclosure provides a computer program product, the computer program product includes a computer program/instruction, the computer program/instruction when executed by a processor, implements the above method.

### BRIEF DESCRIPTION OF DRAWINGS

The drawings herein are incorporated into and form a part of the specification, illustrate embodiments consistent with the present disclosure, and are used in conjunction with the specification to explain the principles of the present disclosure.

To more clearly illustrate the embodiments of the present disclosure, the drawings required to be used for the embodiments are briefly described in the following, obviously, for those skilled in the art, other drawings can be acquired based on these drawings without any inventive work.
Fig. 1 is a schematic flowchart of a conversion method for a multimedia editing file provided by an embodiment of the present disclosure;
Fig. 2 is a schematic diagram of an interaction logic between a first application and a second application provided by an embodiment of the present disclosure;
Fig. 3 is a schematic diagram of an underlying architecture of an electronic device provided by an embodiment of the present disclosure;
Fig. 4 is a logical schematic diagram of a conversion method for a multimedia editing file provided by an embodiment of the present disclosure;
Fig. 5 is a structural schematic diagram of a conversion apparatus for a multimedia editing file provided by an embodiment of the present disclosure; and
Fig. 6 is a structural schematic diagram of a conversion device provided by an embodiment of the present disclosure.

### DETAILED DESCRIPTION

In order to understand the above objects, features and advantages of the present disclosure more clearly, the solutions of the present disclosure are further described below. It should be noted that embodiments and features in the embodiments of the present disclosure may be combined with each other without conflict.

Many specific details are set forth in the following description to facilitate a full understanding of the present disclosure, but the present disclosure may also be implemented in other ways different from those described herein; obviously, the embodiments in the specification are only a part but not all of the embodiments of the present disclosure.

Embodiments of the present disclosure provide a reliable conversion method and apparatus for a multimedia editing file, a device, and a medium.

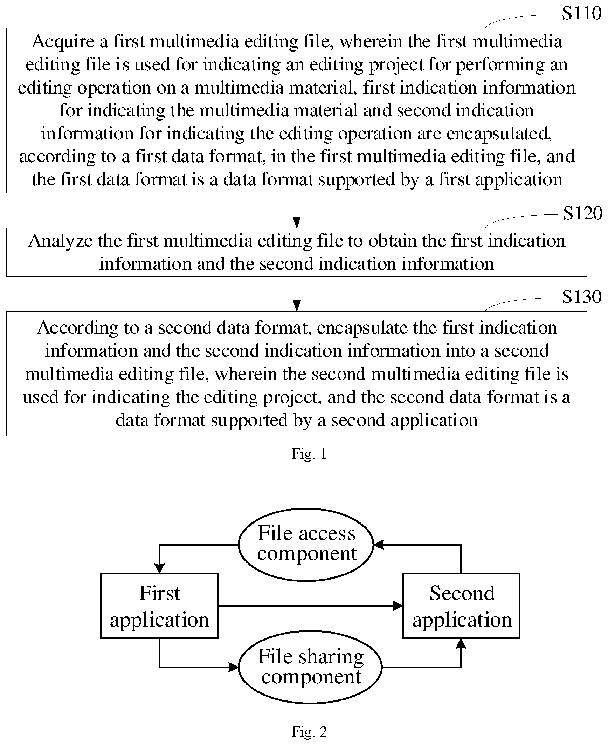

Fig. 1 illustrates a schematic flowchart of a conversion method for a multimedia editing file provided by an embodiment of the present disclosure. As illustrated in Fig. 1, the conversion method for the multimedia editing file includes the following steps.

S110, acquiring a first multimedia editing file, the first multimedia editing file is used to indicate an editing project for performing an editing operation on a multimedia material, a first indication information for indicating the multimedia material and a second indication information for indicating the editing operation are encapsulated in the first multimedia editing file according to a first data format, the first data format is a data format supported by a first application.

The first multimedia editing file is an original editing file generated using the first application.

Optionally, the first multimedia editing file may include, but is not limited to, a video editing file, an audio editing file, a picture editing file, and a text editing file. Correspondingly, the first application may include, but is not limited to, a video editing application, an audio editing application, a picture editing application, and a text editing application.

The first multimedia editing file includes the indication information, the indication information corresponds to the first data format, and the indication information includes the first indication information and the second indication information. Specifically, the first indication information for indicating the multimedia material may be a material number, and the second indication information for indicating the editing operation may be a binary instruction.

The editing project refers to a video project, an audio project, a text project, and the like obtained by the first application editing, and the editing project corresponds to the first data format, the editing operation is a processing operation for generating the editing project, including at least one selected from a group comprising a video editing operation, an audio editing operation, a text editing operation, and a special effect editing operation.

The multimedia material is an original material used by the first application to generate the editing project.

The editing operation is a processing operation for generating the editing project based on the multimedia material.

In the present embodiment, the electronic device utilizes the first application to determine, based on the user operation, the multimedia material and the editing operation for the multimedia material, each multimedia material is indicated using the first indication information, and the editing operation for the multimedia material is indicated using the second indication information, then the first application generates the first multimedia editing file based on the first indication information and the second indication information. Further, the first application identifies the first indication information and the second indication information from the first multimedia editing file using the preconfigured editing component, and generates an editing project by acquiring the multimedia material based on the first indication information and performing the editing operation on the multimedia material based on the second indication information; finally, the first application displays the generated editing project on an editing interface.

As an example, the first application is a first video editing application and the first multimedia editing file is a first video editing file. After the user shoots a video, the first video editing application is utilized to edit the shot video, for example, the user adds a special effect and a background music to the shot video and adjusts the playback order of the shot video on a video editing interface of the first video editing application, in this case, the added special effect, the added background music, and the determined playback order are video materials, that is, multimedia materials, and the operation of adding the special effect, the operation of adding the background music, and the operation of adjusting the playback order are video editing operations, that is, editing operations, and finally, the first video editing file, that is, the first multimedia editing file, is generated from the first indication information corresponding to the video material and the second indication information corresponding to the video editing operation. Further, the first video editing application uses the video editing component to identify the first indication information and the second indication information from the first video editing file, and generates the video project by acquiring the video material based on the first indication information and performing the editing operation on the video material based on the second indication information; finally, the first video editing application displays the generated video project on the video editing interface.

It can be understood that because the first data format is a data format supported by the first application, it means that the file in the first data format can be read and processed by the first application, but it does not mean that the first application can only support the first data format and does not support other data formats.

S120, parsing the first multimedia editing file to acquire the first indication information and the second indication information.

It can be understood that after the electronic device generates the editing project using the first application and displays the editing project on the editing interface, the user also wants to continue editing using the second application, then the electronic device shares the first multimedia editing file to the second application based on the sharing operation of the user. Specifically, during the sharing process, the electronic device may perform data format parsing on the first multimedia editing file through a data format parsing component preconfigured by the first application or the device system to acquire the first indication information and the second indication information.

S130, encapsulating the first indication information and the second indication information into a second multimedia editing file according to a second data format, the second multimedia editing file is used to indicate the editing project, the second data format is a data format supported by the second application.

The second multimedia editing file is a target editing file generated after performing data format conversion on the indication information using the second application.

Optionally, the second multimedia editing file may include, but is not limited to, a video editing file, an audio editing file, a picture editing file, and a text editing file. Correspondingly, the second application may include, but is not limited to, a video editing application, an audio editing application, a picture editing application, and a text editing application.

The second multimedia editing file includes the indication information, the indication information corresponds to the second data format, and the indication information includes the first indication information and the second indication information.

It can be understood that because the second data format is a data format supported by the second application, it means that the file in the second data format can be read and processed by the second application, but it does not mean that the second application can only support the second data format and does not support other data formats.

In some embodiments, the second data format may be a common data format supported by both the first application and the second application, that is, the second multimedia editing file is an intermediate file that can be read by both the first application and the second application. Specifically, after generating the first multimedia editing file using the first application and sharing the generated video project to the second application, the first application encapsulates the first indication information and the second indication information parsed from the first multimedia editing file into the second multimedia editing file according to the second data format. Further, the second application identifies the first indication information and the second indication information from the second multimedia editing file using the preconfigured editing component, and determines the editing project based on the first indication information and the second indication information, finally, the second application may directly display the editing project on the editing interface and publish the editing project, or may also generate a new editing project based on the user's editing operation on the editing project, and finally the second application may display the new editing project on the editing interface and publish the new editing project.

As an example, the first application is a first video editing application, the first multimedia editing file is a first video editing file, and the second application is a second video editing application. After generating the first video editing file using the first video editing application and sharing the generated video project to the second video editing application, the first video editing application encapsulates the first indication information and the second indication information parsed from the first video editing file into the second video editing file according to the second data format. Further, the second video editing application identifies the first indication information and the second indication information from the second video editing file using the preconfigured editing component, and determines the video project based on the first indication information and the second indication information, finally, the second video editing application may directly display the video project on the video interface and publish it the video project, or may also generate a new video project based on the user's editing operation on the video project, and finally the second video editing application may display the new video project on the editing interface and publish the new video project.

In other embodiments, the second data format is a data format supported by the second application and not supported by the first application, that is, the second multimedia editing file is a file that can only be read by the second application. Specifically, after generating the first multimedia editing file using the first application and sharing the generated video project to the second application, the first indication information and the second indication information parsed from the first multimedia editing file may be encapsulated into the second multimedia editing file according to the second data format by the device system or other application. Further, the second application identifies the first indication information and the second indication information from the second multimedia editing file using the preconfigured editing component, and determines the editing project based on the first indication information and the second indication information, finally, the second application may directly display the editing project on the editing interface and publish the editing project, or may also generate a new editing project based on the user's editing operation on the editing project, and finally the second application may display the new editing project on the editing interface and publish the new editing project.

Embodiments of the present disclosure provide a conversion method for converting a multimedia editing file, first, the first multimedia editing file is acquired, the first multimedia editing file is used to indicate an editing project for performing the editing operation on the multimedia material, the first indication information for indicating the multimedia material and the second indication information for indicating the editing operation are encapsulated in the first multimedia editing file according to the first data format, the first data format is a data format supported by the first application; then, the first multimedia editing file is parsed to acquire the first indication information and the second indication information; next, the first indication information and the second indication information are encapsulated into the second multimedia editing file according to the second data format, the second multimedia editing file is used to indicate the editing project, the second data format is a data format supported by the second application. Through the above method, the multimedia material and the editing operation of the multimedia editing file are indicated by different indication information, and the indication information is encapsulated into a data format that can be supported by respective applications themselves, without the need to convert the multimedia material and the editing operation with a large amount of data, and the file format conversion is implemented, through a method of converting the indication information, in different applications, the conversion method is easy to implement and has high conversion efficiency, and also supports the conversion of the multimedia editing file that occupies large memory in different applications, which improves the reliability and universality of multimedia file conversion.

In another embodiment of the present disclosure, the multimedia material can be acquired in various ways, and the types of multimedia materials are also diverse.

Specifically, the method of acquiring the multimedia material includes at least one of the following methods:
acquiring the multimedia material from a multimedia editing interface of the first application;
calling a material parsing component interface of the first application to acquire the multimedia material;
calling a special effect component interface of the first application to acquire the multimedia material.

The multimedia editing interface provides original multimedia editing data, which may include text data, audio data, video data, and the like.

The material parsing component interface can acquire material parsing data, the material parsing component interface may acquire data such as speed change data, rotation data, and scaling data.

The special effect component interface can acquire special effect data. The special effect data may include an audio special effect, an image special effect, and the like.

Optionally, the multimedia material includes at least one data of or a combination of several data of following data:
canvas data, video material data, audio material data, picture material data, and text material data.

Optionally, the canvas data includes a canvas size; the video material data includes at least one selected from a group comprising a video duration, video clipping time, video speed change data, video rotation data, video scaling data, a video width and height, an original path, a position relative to the canvas, and an track hierarchy; the audio material data includes at least one selected from a group comprising an audio duration, audio clipping time, audio speed change data, volume data, audio rotation data, audio scaling data, an audio width and height, and an audio track hierarchy; the picture material data includes at least one selected from a group comprising a picture size, a position relative to the canvas, a picture color, and a picture scenery; and the text material data includes at least one selected from a group comprising a text size, a position relative to canvas, and a track hierarchy.

Therefore, different types of multimedia materials can be acquired through various interfaces, so that the conversion method for the multimedia editing file can be used in various scenarios such as video conversion, audio conversion, text conversion, image conversion, and the like, which improves the universality of the method.

In still another embodiment of the present disclosure, the second data format may be a common data format supported by both the first application and the second application and the data format conversion is performed through the protocol component; the second data format may also be a format supported by the second application and not supported by the first application.

In some embodiments of the present disclosure, the second data format is a common data format supported by both the first application and the second application, correspondingly, after S130, the method further includes the following steps:
encapsulating the second multimedia editing file into a third multimedia editing file according to a third data format, the third multimedia editing file is used to indicate the editing project, the third data format is a data format supported by the second application and not supported by the first application.

Specifically, the editing operation indicated by the second indication information in the first multimedia editing file is implemented by a first protocol component, the first protocol component supports the first data format and does not support the second data format and the third data format.

The editing operation indicated by the second indication information in the third multimedia editing file is implemented by a second protocol component, the second protocol component supports the third data format and does not support the first data format and the second data format.

The first protocol component and the transit protocol component are preconfigured in the first application. The second protocol component is preconfigured in the second application.

Specifically explaining the format conversion process between the two applications, first, the first application utilizes the first protocol component to generate the first multimedia editing file, based on the first indication information corresponding to the multimedia material and the second indication information corresponding to the editing operation, according to the first data format. Further, the first application utilizes the transit protocol component to parse the first multimedia editing file to acquire the first indication information and the second indication information, and the first application utilizes the transit protocol component to generate the second multimedia editing file, based on the first indication information corresponding to the multimedia material and the second indication information corresponding to the editing operation, according to the second data format. Because the second data format is a common data format supported by both the first application and the second application, the first multimedia editing file not supported by the second application can be converted into the second multimedia editing file supported by the second application; finally, the second application utilizes the second protocol component to generate the third multimedia editing file, based on the first indication information corresponding to the multimedia material and the second indication information corresponding to the editing operation, according to the third data format.

To avoid generating redundant files in the photo album or audio folder, the second multimedia editing file can be stored in the memory of the first application and the second application acquires the second multimedia editing file from the memory of the first application.

Correspondingly, in some embodiments, before encapsulating the second multimedia editing file into the third multimedia editing file according to the third data format, the method further includes:
storing the second multimedia editing file into the memory of the first application and setting an access authority to a storage path of the second multimedia editing file;
in response to a sharing operation on the second application, opening the access authority to the storage path to the second application.

The memory of the first application refers to the local memory or cloud space corresponding to the first application.

Setting the access authority refers to opening or closing the access authority to the storage path of the second multimedia editing file.

The sharing operation is a user operation for triggering the first application to share the second multimedia editing file to the second application.

Further, after granting the access authority, encapsulating the second multimedia editing file into the third multimedia editing file according to the third data format specifically includes the following steps:
in case of receiving an access request to the storage path sent by the second application and calling a file sharing component and a file access component preconfigured for the second multimedia editing file, reading the second multimedia editing file from the memory of the first application and encapsulating the second multimedia editing file into the third multimedia editing file according to the third data format.

The access request is request information for accessing the storage path of the first application.

The file sharing component may be a sharing interface between the first application and the second application. Specifically, the file sharing component may be a FileProvider, which may be provided by the device system of the device where the first application is located, and is located at the driver layer of the device system.

The file access component is an access interface between the first application and the second application. Specifically, the file access component may be a ContentProvider, which may be provided by the device system of the device where the first application is located, and is located at the driver layer of the device system.

It can be understood that when calling the device system to start the second application, the device system first determines whether the second application has been installed, if the second application has been installed, the second application is directly started so that the second application generates an access request to the storage path, and the first application responds to the access request and sends the second multimedia editing file to the second application. In other cases, if the second application is not installed, after the device system installs and starts the second application, the second application generates an access request to the storage path, and the first application responds to the access request and sends the second multimedia editing file to the second application.

In order to understand the interaction logic between the first application and the second application, with reference to Fig. 2, when the second application triggers to query the storage path, the second application calls the file access component (ContentProvider) to send an access request to the storage path to the first application, and then the first application calls the file sharing component (FileProvider) to send the second multimedia editing file to the second application.

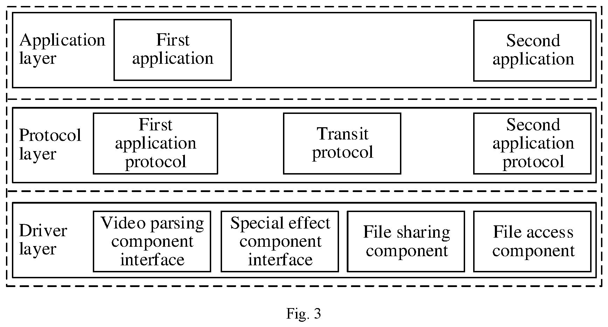

The following is an overall explanation of the above file conversion process based on the underlying architecture, Fig. 3 illustrates a schematic diagram of the underlying architecture of an electronic device provided by an embodiment of the present disclosure.

As illustrated in Fig. 3, the underlying architecture includes an application layer, a protocol layer, and a driver layer. The application layer includes the first application and the second application. The protocol layer includes a first protocol, a transit protocol, and a second protocol. The driver layer includes a video parsing component interface (referred to as video parsing SDK), a special effect component interface (referred to as special effect SDK), a file sharing component (FileProvider), and a file access component (ContentProvider).

Specifically, the first protocol corresponds to the first protocol component, and the first application utilizes the first protocol component to generate the first multimedia editing file, based on the first indication information corresponding to the multimedia material and the second indication information corresponding to the editing operation, according to the first data format. Optionally, the multimedia material can comprise video material data obtained through the video parsing SDK and the special effect material data obtained through the special effect SDK. Further, the transit protocol corresponds to the transit protocol component, and the first application utilizes the transit protocol component to generate the second multimedia editing file, based on the first indication information corresponding to the multimedia material and the second indication information corresponding to the editing operation, according to the second data format. Further, the second protocol corresponds to the second protocol component, and the second application utilizes the second protocol component to generate the third multimedia editing file, based on the first indication information corresponding to the multimedia material and the second indication information corresponding to the editing operation, according to the third data format.

Therefore, the second multimedia editing file corresponding to the second data format can be used as a transit file between the first application and the second application to implement cross-application data format conversion.

In other embodiments of the present disclosure, the editing operation indicated by the second indication information in the first multimedia editing file is implemented by the first application, the first application supports the first data format and does not support the second data format; the editing operation indicated by the second indication information in the second multimedia editing file is implemented by the second application, the second application supports the second data format and does not support the first data format; correspondingly, S130 specifically includes the following step:
utilizing a preconfigured transit application to encapsulate the first indication information and the second indication information into the second multimedia editing file according to the second data format.

The transit application is an application, other than the first application and the second application, installed under the device system. Specifically, the transit application pre-stores the corresponding relationship between the first data format and the second data format, then converts the first data format into the second data format based on the corresponding relationship, and generates the second multimedia editing file supported by the second application.

Therefore, the transit application can be utilized as a bridge for data format conversion to implement cross-application data format conversion.

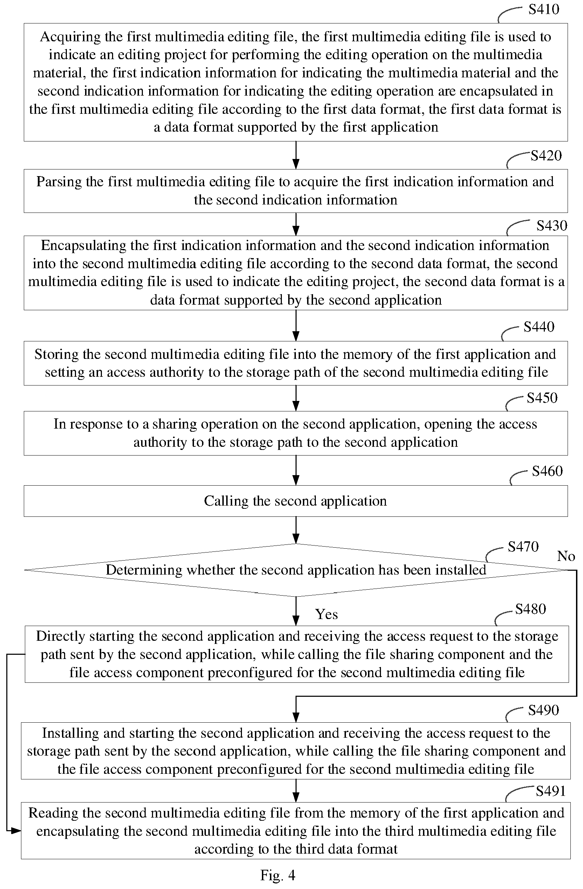

In yet another embodiment of the present disclosure, the conversion method for the multimedia editing file is explained as a whole. It should be noted that the present embodiment takes the implementation of implementing data format conversion through the protocol component in the above embodiment as a specific implementation. Fig. 4 illustrates a logical schematic diagram of a conversion method for a multimedia editing file provided by an embodiment of the present disclosure. As illustrated in Fig. 4, the conversion method for the multimedia editing file includes the following steps.

S410, acquiring the first multimedia editing file, the first multimedia editing file is used to indicate an editing project for performing the editing operation on the multimedia material, the first indication information for indicating the multimedia material and the second indication information for indicating the editing operation are encapsulated in the first multimedia editing file according to the first data format, the first data format is a data format supported by the first application.

S420, parsing the first multimedia editing file to acquire the first indication information and the second indication information.

S430, encapsulating the first indication information and the second indication information into the second multimedia editing file according to the second data format, the second multimedia editing file is used to indicate the editing project, the second data format is a data format supported by the second application.

S440, storing the second multimedia editing file into the memory of the first application and setting an access authority to the storage path of the second multimedia editing file.

S450, in response to a sharing operation on the second application, opening the access authority to the storage path to the second application.

S460, calling the second application.

S470, determining whether the second application has been installed.

Specifically, if the second application has been installed, S480 is directly executed, otherwise S490 is executed.

S480, directly starting the second application and receiving the access request to the storage path sent by the second application, while calling the file sharing component and the file access component preconfigured for the second multimedia editing file.

S490, installing and starting the second application and receiving the access request to the storage path sent by the second application, while calling the file sharing component and the file access component preconfigured for the second multimedia editing file.

S491, reading the second multimedia editing file from the memory of the first application and encapsulating the second multimedia editing file into the third multimedia editing file according to the third data format.

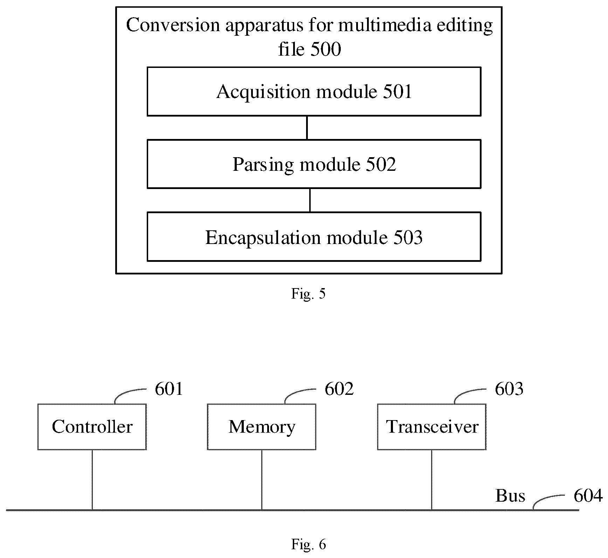

Based on the same inventive concept as the above method embodiments, the present disclosure also provides a conversion apparatus for a multimedia editing file, and with reference to Fig. 5, which is a structural schematic diagram of a conversion apparatus for a multimedia editing file provided by an embodiment of the present disclosure, the conversion apparatus 500 for the multimedia editing file includes:
an acquisition module 501, configured to acquire a first multimedia editing file, the first multimedia editing file is used to indicate an editing project for performing an editing operation on a multimedia material, a first indication information for indicating the multimedia material and a second indication information for indicating the editing operation are encapsulated in the first multimedia editing file according to a first data format, the first data format is a data format supported by a first application;
a parsing module 502, configured to parse the first multimedia editing file to acquire the first indication information and the second indication information;
an encapsulation module 503, configured to encapsulate the first indication information and the second indication information into a second multimedia editing file according to a second data format, the second multimedia editing file is used to indicate the editing project, the second data format is a data format supported by a second application.

In an optional implementation, the second data format is a common data format supported by both the first application and the second application; the apparatus further includes:
a secondary encapsulation module, configured to encapsulate the second multimedia editing file into a third multimedia editing file according to a third data format, the third multimedia editing file is used to indicate the editing project, the third data format is a data format supported by the second application and not supported by the first application.

In an optional implementation, the editing operation indicated by the second indication information in the first multimedia editing file is implemented by a first protocol component, the first protocol component supports the first data format and does not support the second data format and the third data format; the editing operation indicated by the second indication information in the third multimedia editing file is implemented by a second protocol component, the second protocol component supports the third data format and does not support the first data format and the second data format.

In an optional implementation, the apparatus further includes:
an access authority setting module, configured to store the second multimedia editing file into a memory of the first application and set an access authority to a storage path of the second multimedia editing file;
an access authority opening module, configured to open the access authority to the storage path to the second application in response to a sharing operation on the second application.

In an optional implementation, the secondary encapsulation module is specifically configured to read the second multimedia editing file from the memory of the first application and encapsulate the second multimedia editing file into the third multimedia editing file according to the third data format, in response to receiving an access request to the storage path sent by the second application and calling a file sharing component and a file access component preconfigured for the second multimedia editing file.

In an optional implementation, the editing operation indicated by the second indication information in the first multimedia editing file is implemented by the first application, and the first application supports the first data format and does not support the second data format; the editing operation indicated by the second indication information in the second multimedia editing file is implemented by the second application, and the second application supports the second data format and does not support the first data format.

Correspondingly, the encapsulation module is specifically configured to utilize a preconfigured transit application to encapsulate the first indication information and the second indication information into the second multimedia editing file according to the second data format.

In an optional implementation, the multimedia material includes at least one data of or a combination of several data of following data:
canvas data, video material data, audio material data, picture material data, and text material data.

In an optional implementation, the method of acquiring the multimedia material includes at least one of the following:
acquiring the multimedia material from a multimedia editing interface of the first application;
calling a material parsing component interface of the first application to acquire the multimedia material;
calling a special effect component interface of the first application to acquire the multimedia material.

Embodiments of the present disclosure provide a conversion device for a multimedia editing file, first, the first multimedia editing file is acquired, the first multimedia editing file is used to indicate an editing project for performing the editing operation on the multimedia material, the first indication information for indicating the multimedia material and the second indication information for indicating the editing operation are encapsulated in the first multimedia editing file according to the first data format, the first data format is a data format supported by the first application; then, the first multimedia editing file is parsed to acquire the first indication information and the second indication information; next, the first indication information and the second indication information are encapsulated into the second multimedia editing file according to the second data format, the second multimedia editing file is used to indicate the editing project, the second data format is a data format supported by the second application. Through the above method, the multimedia material and the editing operation of the multimedia editing file are indicated by different indication information, and the indication information is encapsulated into a data format that can be supported by respective applications themselves, without the need to convert the multimedia material and the editing operation with a large amount of data, and the file format conversion is implemented, through a method of converting the indication information, in different applications, the conversion method is easy to implement and has high conversion efficiency, and also supports the conversion of the multimedia editing file that occupies large memory in different applications, which improves the reliability and universality of multimedia file conversion.

In addition to the method and apparatus described above, embodiments of the present disclosure also provide a computer-readable storage medium, the computer-readable storage medium stores instructions, the instructions upon running on the terminal device, cause the terminal device to implement the conversion method for the multimedia editing file of embodiments of the present disclosure.

Embodiments of the present disclosure also provide a computer program product, the computer program product includes a computer program/instruction, the computer program/instruction, when executed by a processor, implements the conversion method for the multimedia editing file of embodiments of the present disclosure.

In addition, embodiments of the present disclosure also provide a conversion device for a multimedia editing file, as illustrated in Fig. 6, the conversion device 600 for the multimedia editing file may include:
a processor 601, a memory 602, an input apparatus 603, and an output apparatus 604. The number of processors 601 in the conversion device may be one or more, one processor is taken as an example in Fig. 6. In some embodiments of the present disclosure, the processor 601, the memory 602, the input apparatus 603, and the output apparatus 604 may be connected through a bus or other manners, the connection through the bus is taken as an example in Fig. 6.

The memory 602 may be used to store the software program as well as the module, and the processor 601 executes various functional applications of the conversion device as well as data processing by running the software program as well as the module stored in the memory 602. The memory 602 may primarily include a storage program area and a storage data area, the storage program area may store an operating system, an application program required for at least one function, and the like. In addition, the memory 602 may include a high-speed random-access memory, and may also include a non-volatile memory, such as at least one disk memory device, a flash memory device, or other volatile solid-state memory device. The input apparatus 603 may be used to receive the input numeric or character information and to generate a signal input related to the user setting as well as the function control of the conversion device.

Specifically, in the present embodiment, the processor 601 loads the executable file corresponding to the processes of one or more applications into the memory 602 according to the instruction as follows, and the processor 601 runs the application stored in the memory 602 to implement the various functions of the conversion device described above.

It should be noted that, in the present disclosure, the relational terms such as "first", "second", and the like, are only used to distinguish one entity or operation from another entity or operation, and are not intended to require or imply the existence of any actual relationship or order between these entities or operations. Furthermore, the terms "comprise/comprising", "include/including", or any other variations thereof are intended to cover a non-exclusive inclusion such that a process, method, article, or device that includes a list of elements includes not only those elements, but also other elements not expressly listed, or elements inherent to the process, method, article, or device. Without further limitation, an element qualified by the statement "comprises/includes a..." does not exclude the presence of additional identical elements in the process, method, article, or device that includes the element.

What have been described above are only specific implementations of the present disclosure, enabling those skilled in the art to understand or implement the present disclosure. Various modifications to these embodiments are apparent to those skilled in the art, and the generic principles defined herein may be implemented in other embodiments without departing from the spirit or scope of the present disclosure. Therefore, the present disclosure is not to be limited to the embodiments herein but is intended to be accorded the widest scope consistent with the principles and novel features disclosed herein.

## Claims

1. A conversion method for a multimedia editing file, comprising:
acquiring a first multimedia editing file, wherein the first multimedia editing file is used to indicate an editing project for performing an editing operation on a multimedia material, a first indication information for indicating the multimedia material and a second indication information for indicating the editing operation are encapsulated in the first multimedia editing file according to a first data format, the first data format is a data format supported by a first application;
parsing the first multimedia editing file to acquire the first indication information and the second indication information;
encapsulating the first indication information and the second indication information into a second multimedia editing file according to a second data format, wherein the second multimedia editing file is used to indicate the editing project, the second data format is a data format supported by a second application.

2. The conversion method according to claim 1, wherein the second data format is a common data format supported by both the first application and the second application;
the conversion method further comprises:
encapsulating the second multimedia editing file into a third multimedia editing file according to a third data format, wherein the third multimedia editing file is used to indicate the editing project, the third data format is a data format supported by the second application and not supported by the first application.

3. The conversion method according to claim 2, wherein the editing operation indicated by the second indication information in the first multimedia editing file is implemented by a first protocol component, wherein the first protocol component supports the first data format and does not support the second data format and the third data format;
the editing operation indicated by the second indication information in the third multimedia editing file is implemented by a second protocol component, wherein the second protocol component supports the third data format and does not support the first data format and the second data format.

4. The conversion method according to claim 2 or 3, wherein before the encapsulating the second multimedia editing file into a third multimedia editing file according to a third data format, the conversion method further comprises:
storing the second multimedia editing file into a memory of the first application and setting an access authority to a storage path of the second multimedia editing file;
in response to a sharing operation on the second application, opening the access authority to the storage path to the second application.

5. The conversion method according to claim 4, wherein the encapsulating the second multimedia editing file into a third multimedia editing file according to a third data format comprises:
in case of receiving an access request to the storage path sent by the second application and calling a file sharing component and a file access component preconfigured for the second multimedia editing file, reading the second multimedia editing file from the memory of the first application and encapsulating the second multimedia editing file into the third multimedia editing file according to the third data format.

6. The conversion method according to claim 1, wherein the editing operation indicated by the second indication information in the first multimedia editing file is implemented by the first application, wherein the first application supports the first data format and does not support the second data format; the editing operation indicated by the second indication information in the second multimedia editing file is implemented by the second application, wherein the second application supports the second data format and does not support the first data format;
correspondingly, the encapsulating the first indication information and the second indication information into a second multimedia editing file according to a second data format comprises:
utilizing a preconfigured transit application to encapsulate the first indication information and the second indication information into the second multimedia editing file according to the second data format.

7. The conversion method according to any one of claims 1-6, wherein the multimedia material comprises at least one data of or a combination of several data of following data:
canvas data, video material data, audio material data, picture material data, and text material data.

8. The conversion method according to any one of claims 1-7, wherein a method of acquiring the multimedia material comprises at least one of following methods:
acquiring the multimedia material from a multimedia editing interface of the first application;
calling a material parsing component interface of the first application to acquire the multimedia material;
calling a special effect component interface of the first application to acquire the multimedia material.

9. A conversion apparatus for a multimedia editing file, comprising:
an acquisition module, configured to acquire a first multimedia editing file, wherein the first multimedia editing file is used to indicate an editing project for performing an editing operation on a multimedia material, a first indication information for indicating the multimedia material and a second indication information for indicating the editing operation are encapsulated in the first multimedia editing file according to a first data format, the first data format is a data format supported by a first application;
a parsing module, configured to parse the first multimedia editing file to acquire the first indication information and the second indication information;
an encapsulation module, configured to encapsulate the first indication information and the second indication information into a second multimedia editing file according to a second data format, wherein the second multimedia editing file is used to indicate the editing project, the second data format is a data format supported by a second application.

10. A computer-readable storage medium, the computer-readable storage medium storing instructions, wherein the instructions upon running on a terminal device, cause the terminal device to implement the conversion method according to any one of claims 1-8.

11. A device, comprising: a memory, a processor, and a computer program stored on the memory and capable of being run on the processor, wherein the processor upon executing the computer program, implements the conversion method according to any one of claims 1-8.

12. A computer program product, comprising a computer program/instruction, wherein the computer program/instruction upon execution by a processor, implements the conversion method according to any one of claims 1-8.
